# EUROPÄISCHE PATENTSCHRIFT

(11) **EP 0 916 881 B1**
(45) Veröffentlichungstag und Bekanntmachung des Hinweises auf die Patenterteilung: **10.04.2002**
(21) Anmeldenummer: 98117934.4
(22) Anmeldetag: 22.09.1998
(51) Int. Cl.: F16K 31/06, H01F 7/08, H01F 7/16

(54) **Magnetventil**
Solenoid valve
Valve électromagnétique

(30) Priorität: 18.11.1997 DE 19751113
(43) Veröffentlichungstag der Anmeldung: 19.05.1999
(73) Patentinhaber: Nass Magnet GmbH, 30179 Hannover (DE)
(72) Erfinder: Leuschner, Werner, 30455 Hannover (DE); Latt, Helmut, 31515 Wunstorf (DE); Ossenbrügge, Jan-Peter, 30853 Langenhagen (DE)
(74) Vertreter: Tetzner, Volkmar, Dr.-Ing. Dr. jur.

(56) Entgegenhaltungen:
- CH-A- 627 584
- DE-A- 3 152 325
- DE-C- 3 114 300
- GB-A- 2 156 158
- US-A- 3 598 360
- US-A- 3 722 531
- US-A- 3 889 219
- US-A- 5 280 873

## Beschreibung

Die Erfindung betrifft ein Magnetventil gemäß dem Oberbegriff der Ansprüche 1 und 7.

Derartige Magnetventile sind dem Anmelder vorbekannt und bestehen üblicherweise aus einem Spulenkörper, einem Magnetkern, einem Anker mit Ankerführung und einem Joch. In der DIN VDE 0580 werden für elektromagnetische Geräte Schutzklassen definiert. Ein elektromagnetisches Gerät, bei dem der Schutz gegen gefährliche Körperströme nicht allein auf der Basisisolierung beruht, wird in die Schutzklasse I eingeordnet. In der DIN-Vorschrift wird für diese Schutzklasse angegeben, daß der Schutz im Fehlerfall dadurch gegeben sein muß, daß leitfähige, im Fehlerfall spannungsführende Magnetteile mit dem Schutzleiter oder mit den mit dem Schutzleiter verbundenen leitfähigen Konstruktionsteilen verbunden werden.

Bei den bekannten, oben beschriebenen Magnetventilen wird der Schutzleiter über eine Nietmutter direkt mit dem Joch des Magnetventils verbunden. Die Ankerführung wird über den Magnetkern und eine Metall-Befestigungsmutter mit dem Joch verbunden, wobei für eine sichere Kontaktierung ein erhöhtes Anzugsmoment gewährleistet sein muß. Erfolgt die Befestigung mit einer Kunststoffmutter, läßt die Vorspannung aufgrund des Fließens des Kunststoffes mit der Zeit nach, so daß die Verbindung unzuverlässig wird.

Aus der GB-A-2 156 158 ist ein Magnetventil mit einem Spulenkörper, einem Magnetkern und einem Anker offenbart. Ferner ist ein Polrohr aus magnetischem Material vorgesehen.

Aus der DE-A-31 14 300 ist ein Magnetventil bekannt, bei dem auf den Ventilkörper ein Aufsatzstück aufgeschraubt ist, das ein bewegbares Ventilinnenteil enthält. Das Aufsatzstück wird von einer Magnetspule mit einem Magnetjoch umgeben. Bei der Montage wird die Magnetspule mit dem Magnetjoch auf das Aufsatzteil aufgesteckt und mittels einer Mutter verschraubt, so daß die Spule fest zwischen der Mutter und einem Flansch des Aufsatzstückes eingespannt und so mit dem Ventilkörper verbunden ist. Zwischen dem Flansch und der Magnetspule bzw. dem Magnetjoch ist eine Dichtungsscheibe eingelegt, um einerseits eine Abdichtung der Spule gegenüber dem Ventilkörper und andererseits eine Verbindung mit dem Erdleiter zu gewährleisten.

Der Erfindung liegt daher die Aufgabe zugrunde, eine neue Lösung zu finden, um im Fehlerfall spannungsführende Magnetteile mit dem Schutzleiter oder mit den mit dem Schutzleiter verbundenen leitfähigen Konstruktionsteilen zu verbinden.

Erfindungsgemäß wird diese Aufgabe durch die kennzeichnenden Merkmale der Ansprüche 1 und 7 gelöst. Bei der ersten erfinderischen Lösung weist das zwischen Joch und Ankerführung angeordnete Polrohr erste zusätzliche Mittel zur Herstellung eines elektrischen Kontakts mit der Ankerführung und zweite zusätzliche Mittel zur Herstellung eines elektrischen Kontakts mit dem Joch auf. Bei dieser Ausführung werden somit die Ströme nicht von der Ankerführung über den Magnetkern auf das Joch, sondern von der Ankerführung über das Polrohr zum Joch weitergeleitet.

In der Ausführung gemäß dem Anspruch 7 ist eine Befestigungsplatte vorgesehen, die auf der Seite des Magnetventils angeordnet ist, auf der die Ankerführung aus dem Joch herausragt, wobei die Ankerführung durch die Befestigungsplatte hindurchragt. Erfindungsgemäß wird zwischen der Befestigungsplatte und der Ankerführung ein Kontaktierungselement vorgesehen, das einen elektrischen Kontakt zwischen Befestigungsplatte und Ankerführung herstellt. Bei dieser Variante werden die Ströme von der Ankerführung über die Befestigungsplatte auf damit verbundene, leitfähige Konstruktionsteile übertragen, die mit dem Schutzleiter in Verbindung stehen.

Beide Ausführungen haben den Vorteil, daß es nicht mehr auf eine sichere Kontaktierung zwischen Magnetkern und Joch ankommt und somit keine so hohen Anforderungen an die Befestigungsmutter gestellt werden müssen. Es können daher auch Befestigungsmuttern aus Kunststoff verwendet werden.

Weitere Ausgestaltungen der Erfindung sind Gegenstand der Unteransprüche.

Die Erfindung wird im folgenden anhand der Beschreibung und der Zeichnung näher erläutert.

In der Zeichnung zeigen
- Fig.1: eine Schnittdarstellung des Magnetventils gemäß einem ersten Ausführungsbeispiel,
- Fig.2: eine Seitenansicht des Polrohres,
- Fig.3: eine Aufsicht des Polrohres,
- Fig.4: eine geschnittene Detailansicht des Magnetventils gemäß einem zweiten Ausführungsbeispiel,
- Fig.5: eine Aufsicht des Kontaktierungselementes und
- Fig.6: eine geschnittene Seitenansicht des Kontaktierungselementes.

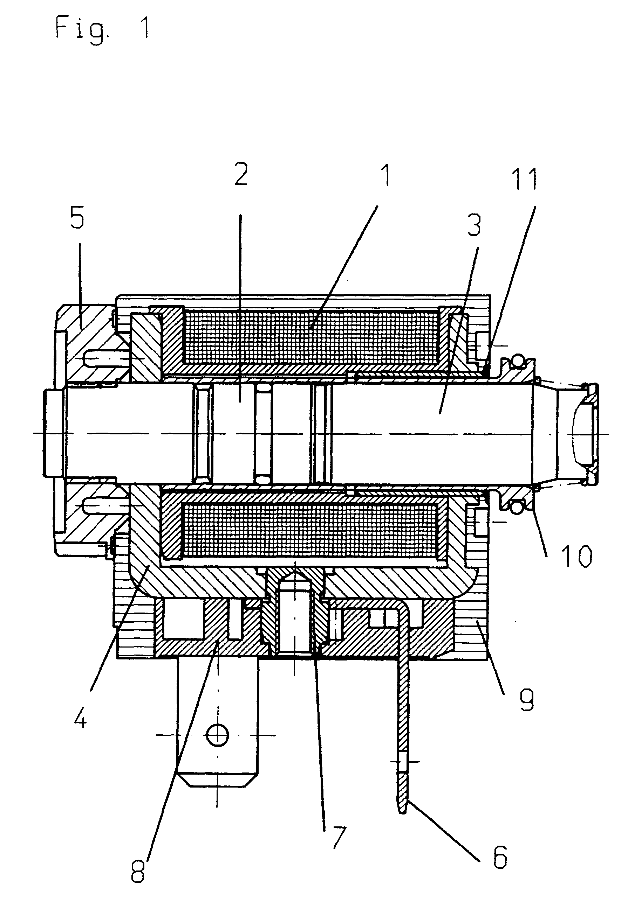

Fig.1 zeigt ein Magnetventil gemäß einem ersten Ausfuhrungsbeispiel. Es besteht im wesentlichen aus einem Spulenkörper 1, einem Magnetkern 2, einem Anker 3 und einem U-förmigen Joch 4, in das der Spulenkörper 1 eingeschoben ist.

Der Magnetkern 2 wird mit dem Joch 4 über eine Befestigungsmutter 5 gehaltert. Ferner ist ein Schutzleiteranschluß 6 vorgesehen, der mit einer Nietmutter 7 am Joch 4 befestigt ist. Zur Ansteuerung des Magnetventils ist ferner ein Anschlußblock 8 vorgesehen, der im Bereich der Nietmutter 7 auf das Joch 4 aufgesteckt ist. Das Magnetventil weist zudem eine Kunststoffummantelung 9 auf.

Der Anker 3 wird in einer zylindrischen Ankerführung 10 geführt, die mit dem Magnetkern 2 verpreßt ist. Die Ankerführung 10 ist durch das Joch 3 hindurchgeführt und ragt mit einem Ende aus dem Magnetventil heraus. Dieses Ende wird dann mit einem zu steuernden Bauteil in Kontakt gebracht. Um einen guten magnetischen Übergang zwischen Joch 3 und Magnetkern 2 zu gewährleisten, ist ein Polrohr 11 vorgesehen, das den Luftspalt zwischen Joch 3 und Ankerführung 10 verringert. Es besteht vorzugsweise aus Stahl.

Erfindungsgemäß weist dieses Polrohr erste zusätzliche Mittel zur Herstellung eines elektrischen Kontakts mit der Ankerführung und zweite zusätzliche Mittel zur Herstellung eines elektrischen Kontakts mit dem Joch auf.

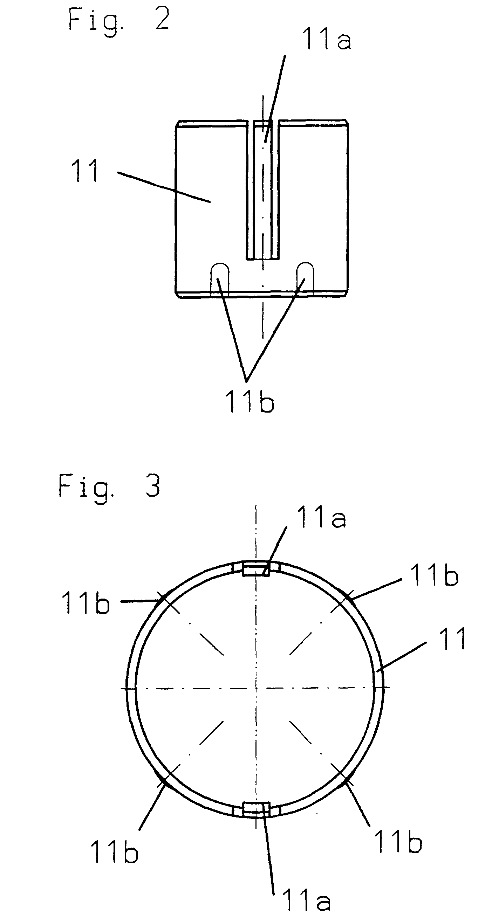

Die nähere Ausgestaltung des Polrohres ist aus den Fig.2 und 3 ersichtlich. Das Polrohr ist zylindrisch ausgebildet und wird beispielsweise aus einem Rohrstück oder einem gewalzten Blech hergestellt.

Im dargestellten Beispiel werden die ersten Mittel zur Herstellung des elektrischen Kontakts mit der Ankerführung durch zwei nach innen gebogene Federarme 11a gebildet. Die zweiten Mittel zur Herstellung des elektrischen Kontakts mit dem Joch werden hier durch Sicken 11b realisiert, die nach außen vorstehen, so daß das Polrohr 11 in diesem Bereich einen etwas größeren Durchmesser aufweist.

Beim Einbau des Polrohres kommt es im Bereich der Sicken 11b zu einem Preßsitz mit dem Joch. Die nach innen gebogenen Federarme 11a kommen dabei in ausreichenden Kontakt mit der Ankerführung 10. Auf diese Weise können Ströme vom Magnetkern 2 über die Ankerführung 10 zum Joch 4 und somit zum Schutzleiteranschluß 6 abgeleitet werden.

Selbstverständlich sind im Rahmen der Erfindung auch andere Mittel zur Herstellung der elektrischen Kontakts möglich. So können insbesondere statt der Sicken 11b auch in diesem Bereich Federarme vorgesehen werden, die nach außen gebogen sind.

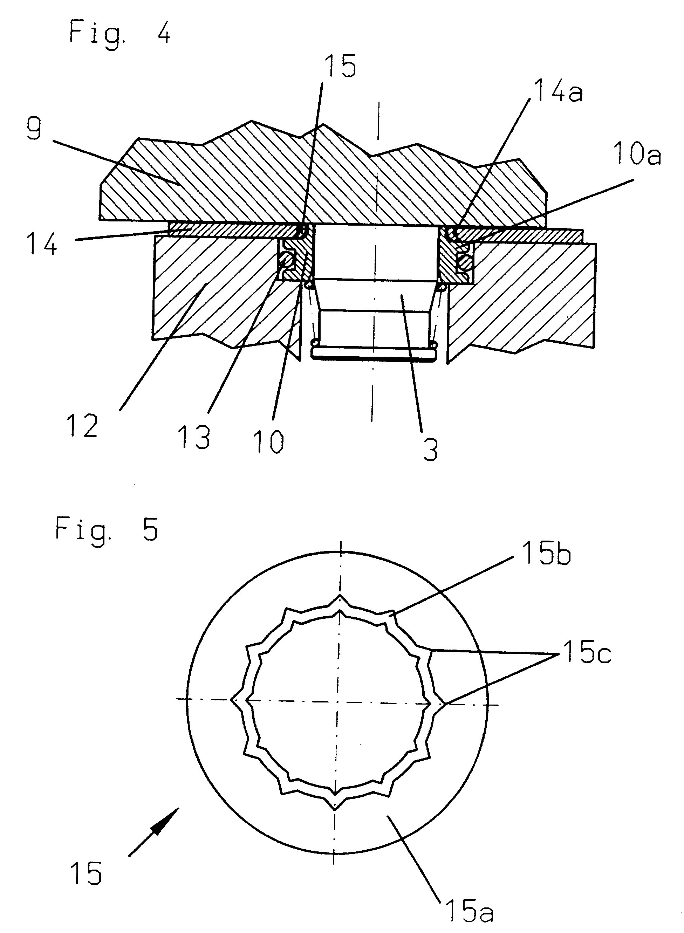

Fig.4 zeigt ein zweites Ausführungsbeispiel, das jedoch nur eine Detailansicht im Bereich des aus dem Magnetventil herausragenden Ankers 3 zeigt. Das Magnetventil ist ansonsten entsprechend der Fig.1 ausgebildet. Lediglich das Polrohr kann wahlweise auch auf herkömmliche Weise, d.h. ohne Mittel zur elektrischen Kontaktierung, ausgebildet sein. Das in Fig.4 dargestellte Magnetventil ist auf der Seite, auf der der Anker 3 herausragt, mit einem Bauteil 12 gekoppelt. Um einen dichten Verschluß zu gewährleisten, ist zwischen Ankerführung 10 und Bauteil 12 eine Dichtung 13 vorgesehen.

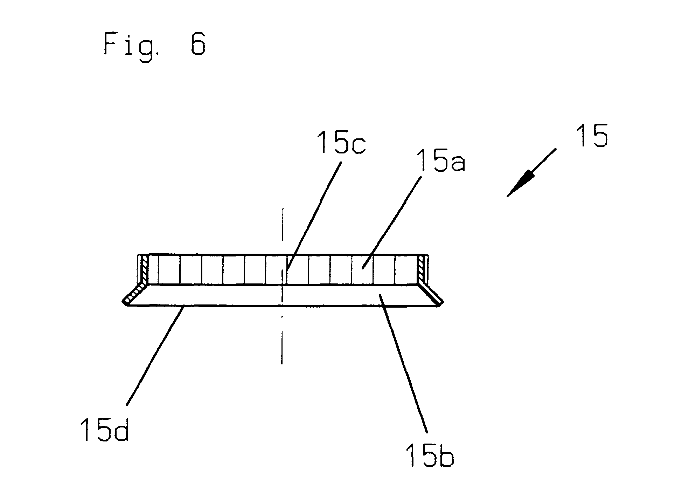

Das Magnetventil weist auf der dem Bauteil 12 zugewandten Seite eine Befestigungsplatte 14 auf, durch die die Ankerführung 10 hindurchragt. Erfindungsgemäß ist zwischen der Befestigungsplatte 14 und der Ankerführung 10 ein Kontaktierungselement 15 vorgesehen, das einen elektrischen Kontakt zwischen Befestigungsplatte 14 und Ankerführung 10 herstellt. Auf diese Weise können etwaige Ströme vom Magnetkern über die Ankerführung 10, das Kontaktierungselement 15, die Befestigungsplatte 14 und das Bauteil 12 abgeleitet werden. Ein Beispiel für ein Kontaktierungselement 15 ist in den Fig.5 und 6 dargestellt.

Das Kontaktierungselement ist vorzugsweise ringförmig und federnd ausgebildet, um einen möglichst guten elektrischen Kontakt zwischen Befestigungsplatte 14 und Ankerführung 10 herzustellen. Das dargestellte Kontaktierungselement 15 besteht aus einem im wesentlichen zylindrischen Teil 15a und einem sich daran anschließenden kegelstumpfförmigen Teil 15b.

Der im wesentlichen zylindrische Teil 15a weist auf seinem äußeren Umfang etwa gleichmäßig verteilte und in Längsrichtung verlaufende rippenartige Auswölbungen 15c auf. Diese Auswölbungen können beispielsweise durch entsprechende Druckbeanspruchtung auf der Innenseite hergestellt werden. Die Befestigungsplatte 14 weist zweckmäßigerweise eine Bohrung 14a auf, die im Durchmesser geringfügig kleiner als der Durchmesser des zylindrischen Teils 15a ist. Durch die rippenartigen Auswölbungen 15c läßt sich auf diese Weise ein Preßsitz des Kontaktierungelements 15 in der Bohrung 14a der Befestigungsplatte 14 herstellen.

Der kegelstumpfförmige Teil 15b bildet den federnden Teil des Kontaktierungselementes 15. Das Kontaktierungselement 15 weist eine untere Kante 15d auf, mit der es auf einer flanschartigen Erweiterung 10a der Ankerführung 10 aufliegt und dadurch den elektrischen Kontakt herstellt.

Sowohl die besondere Ausgestaltung des Polrohres als auch das Vorsehen des Kontaktierungselementes 15 stellen zwei voneinander unabhängige Möglichkeiten dar, um einen Schutz im Fehlerfall zu gewährleisten. Selbstverständlich können im Rahmen der Erfindung auch beide Varianten bei einem Magnetventil verwirklicht werden.

## Patentansprüche

1. Magnetventil mit einem Spulenkörper (1), einem Magnetkern (2), einem Anker (3) mit Ankerführung (10), einem Joch (4) und einem zwischen Joch und Ankerführung angeordneten Polrohr (11),
**dadurch gekennzeichnet, daß** das Polrohr erste zusätzliche Mittel zur Herstellung eines elektrischen Kontakts mit der Ankerführung (10) und zweite zusätzliche Mittel zur Herstellung eines elektrischen Kontakts mit dem Joch (4) aufweist.

2. Magnetventil nach Anspruch 1, **dadurch gekennzeichnet, daß** das Polrohr (11) zylindrisch ausgebildet ist und die beiden Mittel zur Herstellung des elektrischen Kontakts einstückig mit dem Polrohr ausgebildet sind.

3. Magnetventil nach Anspruch 1 oder 2, **dadurch gekennzeichnet, daß** eines der beiden Mittel durch wenigstens einen gebogenen Federarm (11a) gebildet wird.

4. Magnetventil nach einem der vorhergehenden Ansprüche, **dadurch gekennzeichnet, daß** eines der beiden Mittel durch Sicken (11b) gebildet wird.

5. Magnetventil nach einem der vorhergehenden Ansprüche, **dadurch gekennzeichnet, daß** die ersten Mittel durch wenigstens zwei gebogene Federarme (11a) gebildet werden.

6. Magnetventil nach einem der vorhergehenden Ansprüche, **dadurch gekennzeichnet, daß** die zweiten Mittel durch Sicken gebildet werden, die nach außen vorstehen.

7. Magnetventil mit einem Spulenkörper (1), einem Magnetkern (2), einem Anker (3) mit Ankerführung (10), einem Joch (4) sowie einer Befestigungsplatte (14), die auf der Seite des Magnetventils angeordnet ist, auf der die Ankerführung (10) aus dem Joch (4) herausragt, wobei die Ankerführung durch die Befestigungsplatte hindurchragt,
**dadurch gekennzeichnet, daß** zwischen Befestigungsplatte (14) und Ankerführung (10) ein Kontaktierungselement (15) vorgesehen ist, das einen elektrischen Kontakt zwischen Befestigungsplatte und Ankerführung herstellt.

8. Magnetventil nach Anspruch 7, **dadurch gekennzeichnet, daß** das Kontaktierungselement (15) ringförmig ausgebildet ist.

9. Magnetventil nach Anspruch 7 oder 8, **dadurch gekennzeichnet, daß** das Kontaktierungselement (15) federnd ausgebildet ist.

## Claims

1. Solenoid valve with a coil body (1), a magnet core (2), an armature (3) with armature guide (10), a yoke (4) and a pole tube (11) disposed between the yoke and the armature guide, **characterised in that** the pole tube has first additional means for producing an electrical contact with the armature guide (10) and second additional means for producing an electrical contact with the yoke (4).

2. Solenoid valve as claimed in Claim 1, **characterised in that** the pole tube (11) is of cylindrical construction and the two means for producing the electrical contact are constructed integrally with the pole tube.

3. Solenoid valve as claimed in Claim 1 or 2, **characterised in that** one of the two means is formed by at least one bent spring arm (11a).

4. Solenoid valve as claimed in one of the preceding claims, **characterised in that** one of the two means is formed by beads (11b).

5. Solenoid valve as claimed in one of the preceding claims, **characterised in that** the first means are formed by at least two bent spring arms (11a).

6. Solenoid valve as claimed in one of the preceding claims, **characterised in that** the second means are formed by beads which project outwards.

7. Solenoid valve with a coil body (1), a magnet core (2), an armature (3) with armature guide (10), a yoke (4) and a fixing plate (14) which is disposed on the side of the solenoid valve on which the armature guide (10) projects out of the yoke (4), the armature guide projecting through the fixing plate, **characterised in that** a contacting element (15) which produces an electrical contact between the fixing plate (14) and the armature guide (10) is provided between the fixing plate and the armature guide.

8. Solenoid valve as claimed in Claim 7, **characterised in that** the contacting element (15) is of annular construction.

9. Solenoid valve as claimed in Claim 7 or 8, **characterised in that** the contacting element (15) is of resilient construction.

## Revendications

1. Vanne magnétique avec une armature de bobine de champ (1), un tore magnétique (2) un induit (3) avec un guidage d'induit (10), une culasse (4) et une conduite de pôle (11) placée entre la culasse et le guidage d'induit,
**caractérisée en ce que** la conduite de pôle présente un premier moyen supplémentaire destiné à produire un contact électrique avec le guidage d'induit (10) et un deuxième moyen supplémentaire destiné à produire un contact électrique avec la culasse (4).

2. Vanne magnétique selon la revendication 1 **caractérisée en ce que** la conduite de pôle (11) a une forme cylindrique et que les deux moyens destinés à produire un contact électrique forment une seule pièce avec la conduite de pôle.

3. Vanne magnétique selon la revendication 1 ou 2 **caractérisée en ce que** l'un des deux moyens est formé par au moins un bras élastique (11a) courbé.

4. Vanne magnétique selon l'une des revendications précédentes **caractérisée en ce que** l'un des deux moyens est formé par des moulures (11b).

5. Vanne magnétique selon l'une des revendications précédentes **caractérisée en ce que** les premiers moyens sont formés par au moins deux bras élastiques (11a) courbés.

6. Vanne magnétique selon l'une des revendications précédentes **caractérisée en ce que** les deuxièmes moyens sont formés par des moulures en saillie vers l'extérieur.

7. Vanne magnétique avec une armature de bobine de champ (1), un tore magnétique (2) un induit (3) avec un guidage d'induit (10), une culasse (4) ainsi qu'une plaque de fixation (14) qui est placée sur le côté de la vanne magnétique et sur laquelle le guidage d'induit (10) fait saillie sur la culasse (4), le guidage d'induit traversant la plaque de fixation,
**caractérisée en ce que** entre la plaque de fixation (14) et le guidage d'induit (10) on a prévu un élément de contact (15) qui produit un contact électrique entre la plaque de fixation et le guidage d'induit.

8. Vanne magnétique selon la revendication 7 **caractérisée en ce que** l'élément de contact (15) présente une forme d'anneau.

9. Vanne magnétique selon la revendication 7 ou 8 **caractérisée en ce que** l'élément de contact (15) est conçu de façon élastique.
